# EUROPÄISCHE PATENTSCHRIFT

(11) **EP 1 355 052 B1**
(45) Veröffentlichungstag und Bekanntmachung des Hinweises auf die Patenterteilung: **02.04.2008**
(21) Anmeldenummer: 02100371.0
(22) Anmeldetag: 15.04.2002
(51) Int. Cl.: F02B 37/04, F02B 33/44, F02B 37/16, F02B 37/14, F02B 39/10

(54) **Ladesystem für eine Brennkraftmaschine sowie Verfahren zu dessen Regelung**
Charge system for an internal combustion engine and process for its control
Système à surcharge pour un moteur à combustion interne et méthode pour son réglage

(43) Veröffentlichungstag der Anmeldung: 22.10.2003
(73) Patentinhaber: Ford Global Technologies, LLC, Dearborn, MI 48126 (US)
(72) Erfinder: Sommerhoff, Franz-Arnd, 52066, Aachen (DE); Paffrath, Holger, 50259, Pulheim (DE); Schorn, Norbert, 52080, Aachen (DE)
(74) Vertreter: Drömer, Hans-Carsten

(56) Entgegenhaltungen:
- EP-A- 0 354 054
- EP-A- 0 367 406
- EP-A- 1 154 133
- DE-A- 3 100 732
- DE-A- 19 905 112
- US-A- 6 062 026
- US-A- 6 079 211
- PATENT ABSTRACTS OF JAPAN vol. 007, no. 071 (M-202), 24. März 1983 (1983-03-24) & JP 57 212331 A (HITACHI SEISAKUSHO KK), 27. Dezember 1982 (1982-12-27)
- PATENT ABSTRACTS OF JAPAN vol. 013, no. 299 (M-847), 11. Juli 1989 (1989-07-11) & JP 01 087828 A (ASMO CO LTD), 31. März 1989 (1989-03-31)

## Beschreibung

Die Erfindung betrifft ein Verfahren zur Erhöhung des Ladedrucks einer Brennkraftmaschine mit Hilfe eines (elektrisch betriebenen) Kompressors, wobei eine den Kompressor umgehende Bypaßleitung mit einer darin angeordneten Bypaßklappe vorgesehen ist. Ferner betrifft die Erfindung ein Ladesystem für eine Brennkraftmaschine enthaltend einen z. B. elektrisch betriebenen Kompressor und eine den Kompressor umgehende Bypaßleitung mit einer Bypaßklappe.

Zur Leistungssteigerung von Brennkraftmaschinen können Ladesysteme eingesetzt werden, welche durch eine Druckerhöhung im Ansaugsystem der Brennkraftmaschine für eine erhöhte Füllung der Zylinder mit Ladeluft sorgen. Häufig werden dabei sogenannte Abgasturbolader verwendet, deren Antrieb durch die aus dem Motor ausströmenden Abgase erfolgt. Nachteilig hieran ist jedoch, daß diese nur verzögert auf eine plötzliche erhöhte Leistungsanforderung an den Motor reagieren können, da sich zunächst der Abgasstrom aus dem Motor erhöhen muß, bevor der Aufbau des Ladedrucks durch den Abgasturbolader steigen kann.

Zur Steigerung der Dynamik bei der Aufladung einer Brennkraftmaschine ist es daher bekannt, unterstützende elektrisch betriebene Ladesysteme einzusetzen, welche durch eine steuerbare Zufuhr elektrischer Energie quasi verzögerungslos aktiviert werden können. Ein derartiges unterstützendes Ladesystem ist beispielsweise aus der US 6 029 452 bekannt. Bei diesem bekannten Ladesystem ist ein elektrisch betriebener Kompressor im Ansaugsystem der Brennkraftmaschine vor einem Abgasturbolader angeordnet. Parallel zu diesem Kompressor verläuft eine Bypaßleitung, über welche die Brennkraftmaschine bei hohen Drehzahlen direkt und unter Umgehung des Kompressors Ladeluft ansaugen kann. In der Bypaßleitung befindet sich eine schwenkbare Bypaßklappe, die nach Art eines Rückschlagventils in Abhängigkeit von den herrschenden Druckverhältnissen den Durchgang durch die Bypaßleitung öffnet oder schließt. Um elektrische Energie zu sparen, wird der Kompressor abgeschaltet, wenn dieser nicht benötigt wird. Dies hat jedoch den Nachteil, daß es bei einer plötzlichen Leistungsanforderung zu Verzögerungen kommt, da der Kompressor erst auf seine Betriebsdrehzahl hochfahren muß.

Aus DE 199 05 112 A1 ist eine Vierzylinder-Kolbenbrennkraftmaschine mit einer Abgasturbolader-Einheit sowie einem in einer Bypaßleitung angeordneten Nachverdichter bekannt, wobei im Bereich der Bypaßleitung ein Sperrventil angeordnet ist, dessen Stellantrieb über die Motorsteuerung ansteuerbar ist.

Ferner ist aus EP 1 154 133 A2 ebenfalls eine Brennkraftmaschine mit einem Abgasturbolader und einem Zusatzverdichter bekannt, wobei zwischen dem Zusatzverdichter und dem Abgasturbolader mindestens ein Absperr- bzw. Umschaltorgan angeordnet ist, und wobei eine elektronische Steuerungs- oder Regelungseinrichtung für den Antrieb des Zusatzverdichters und für das Absperr- bzw. Umschaltorgan vorhanden ist.

Weitere gattungsgemäße Brennkraftmaschinen sind aus DE 31 00 732 A1, JP 57212331 A, JP 01087828 A sowie US 6,062,026 bekannt.

Es ist eine Aufgabe der vorliegenden Erfindung, ein Ladesystem bzw. ein Verfahren zu seinem Betrieb bereitzustellen, welches eine schnelle Reaktion auf Leistungsanforderungen erlaubt.

Diese Aufgabe wird durch ein Verfahren mit den Merkmalen des unabhängigen Anspruchs 1 sowie durch ein Ladesystem mit den Merkmalen des unabhängigen Anspruchs 5 gelöst.

Vorteilhafte Ausgestaltungen sind in den abhängigen ansprüchen enthalten.

Das erfindungsgemäße Verfahren bewirkt eine Erhöhung des Ladedrucks einer Brennkraftmaschine mit Hilfe eines elektrisch betriebenen Kompressors, wobei eine den Kompressor umgehende Bypaßleitung mit einer darin angeordneten Bypaßklappe vorgesehen ist. Das Verfahren ist dadurch gekennzeichnet, daß die Bypaßklappe (und damit die Bypaßleitung) in bestimmten Situationen aktiv auch dann ganz oder teilweise geschlossen wird, wenn der Kompressor ausgeschaltet ist. Insbesondere kann dieses komplette oder teilweise Schließen der Bypaßklappe bei ausgeschalteten Kompressor stattfinden, wenn die Drehzahl und/oder Last der Brennkraftmaschine in einem unteren Bereich liegen.

Wenn der elektrisch betriebene Kompressor (im Folgenden EDC - "Electric Driven Compressor" - abgekürzt) zur Erhöhung des Ladedruckes nicht erforderlich und daher abgeschaltet ist, wird bei bekannten Ladesystemen die Ladeluft über die Bypaßleitung an diesem vorbei geleitet, um einen möglichst geringen Strömungswiderstand zu erzielen. In der Regel geschieht das Öffnen der Bypaßleitung dabei über passive Bypaßklappen, die sich entsprechend den Druckverhältnissen automatischen öffnen oder schließen kann. Das vorliegende Verfahren schlägt im Unterschied hierzu vor, die Bypaßklappe aktiv derart einzustellen, daß auch bei abgeschaltetem Kompressor gezielt die Bypaßleitung ganz oder teilweise geschlossen und damit Ladeluft über den Kompressor geleitet wird. Dieses hinsichtlich des Strömungswiderstandes an sich ungünstige Vorgehen hat eine überraschende Steigerung der Dynamik des Ladesystems zur Folge. Wenn der EDC aufgrund einer erhöhten Leistungsanforderung plötzlich eingeschaltet wird, besitzt dieser bereits eine gewisse, über Null liegende Leerlaufdrehzahl aufgrund des aerodynamischen Mitnahmeeffektes der den EDC durchströmenden Ladeluft. Dabei hat sich gezeigt, daß diese Leerlaufdrehzahl zu einer sehr viel schnelleren Reaktion des Ladesystems beiträgt.

Die Umleitung der Ladeluft über den abgeschalteten EDC findet vorzugsweise in derartigen Betriebszuständen der Brennkraftmaschine statt, in denen mit einem plötzlichen Einschalten des EDC aufgrund einer erhöhten Leistungsanforderung zu rechnen ist. Dies ist insbesondere dann der Fall, wenn die Brennkraftmaschine mit einer geringen Drehzahl und/oder geringen Last betrieben wird, wobei die genauen Werte von den individuellen Parametern des Ladesystems, der Brennkraftmaschine und der Systemumgebung abhängen.

Gemäß einer Weiterbildung des Verfahrens wird das Öffnen der Bypaßklappe derart geregelt, daß eine vorgegebene Leerlaufdrehzahl des Kompressors EDC eingehalten wird. Auf diese Weise wird erreicht, daß sich der EDC ständig mit einer Leerlaufdrehzahl dreht, die ein schnellstmögliches Ansprechen im Falle eines Einschaltens gewährleistet. Andererseits wird jedoch die Menge der über den EDC zu leitenden Ladeluft nicht größer als benötigt eingestellt, so daß die Strömungsverluste minimiert werden.

Bei einer anderen Weiterbildung der Erfindung wird das Öffnen der Bypaßklappe derart geregelt, daß ein vorgegebener Druckabfall über den abgeschalteten Kompressor eingehalten wird. Durch die Gewährleistung eines derartigen Druckabfalls wird - ähnlich zu der vorstehend beschriebenen Regelung der Drehzahl - erreicht, daß der EDC ohne Einsatz elektrischer Energie in einem Bereitschaftszustand bleibt, aus welchem heraus dieser bei einem Einschalten schnellstmöglich seine optimale Leistung erreicht.

Die Erfindung betrifft weiterhin ein Ladesystem für eine Brennkraftmaschine, enthaltend einen elektrisch betriebenen Kompressor EDC und eine den Kompressor umgehende Bypaßleitung mit einer Bypaßklappe, wobei gemäß dem Oberbegriff des Anspruchs 5 die Bypaßklappe mit einem Aktuator zur aktiven Verstellung der Klappe verbunden ist. Die Bypaßklappe bewegt sich somit nicht (nur) passiv in Abhängigkeit von den auf beiden Seiten herrschenden Drücken, sondern kann aktiv eingestellt werden. Daher ist es insbesondere möglich, die Bypaßleitung aktiv ganz oder teilweise zu verschließen und hierdurch Ladeluft über den Kompressor zu führen, so daß dieser durch den aerodynamischen Mitnahmeeffekt der Ladeluft in Drehung versetzt werden kann, wenn dessen elektrische Energieversorgung abgeschaltet ist. Wie vorstehend in Verbindung mit dem Verfahren erläutert, kann der EDC hierdurch in einem Bereitschaftszustand gehalten werden, aus welchem heraus dieser im Falle eines Anschaltens schnell seine optimale Leistung erreicht.

Das Ladesystem ist dadurch gekennzeichnet, dass der Aktuator mit einem Regler verbunden ist, welcher zur Durchführung eines Verfahrens der vorstehend erläuterten Art eingerichtet ist. D.h., daß der Regler über die Steuerung des Aktuators eine vorgegebene Drehzahl des EDC und/oder einen vorgegebenen Druckabfall über den EDC einzuhalten versucht. Das Ladesystem umfaßt dabei auch die zu dieser Regelung jeweils erforderlichen Sensoren, also zum Beispiel einen Drehzahlsensor am EDC, Drucksensoren stromaufwärts und/oder stromabwärts des EDC od. dgl..

Ein entsprechender Sensor für die Drehzahl des EDC kann mit geringem Hardwareaufwand beispielsweise dadurch realisiert werden, daß die Signalmuster, die der frei laufende Elektromotor in die Motorspulen induziert, analysiert wird, woraus sich Rückschlüsse auf die Motordrehzahl ergeben.

Der elektrisch betriebene Kompressor EDC wird vorzugsweise in Verbindung mit einem Abgasturbolader eingesetzt, wobei dieser stromaufwärts oder stromabwärts bezüglich des Abgasturboladers im Strom der Ladeluft angeordnet sein kann. In diesem Falle wird die Druckerhöhung der Ladeluft bei ausreichend hohen Drehzahlen der Brennkraftmaschine vom Abgasturbolader bewirkt, und der EDC muß nur bei geringen Drehzahlen und in einer Anfangsphase der Druckerhöhung hinzugeschaltet werden.

Im Folgenden wird die Erfindung anhand der Figuren beispielhaft näher erläutert.
Es zeigen:
- Fig. 1: eine Brennkraftmaschine mit einem elektrisch betriebenen Kompressor EDC stromabwärts eines Turboladers;
- Fig. 2: eine Brennkraftmaschine mit einem elektrisch betriebenen Kompressor EDC stromaufwärts eines Turboladers;
- Fig. 3: ein Diagramm der zeitlichen Entwicklung des Motordrehmoments T im laufenden Betrieb sowie im transienten Betrieb der Brennkraftmaschine ohne EDC, mit EDC sowie mit EDC unter Anwendung des erfindungsgemäßen Verfahrens.

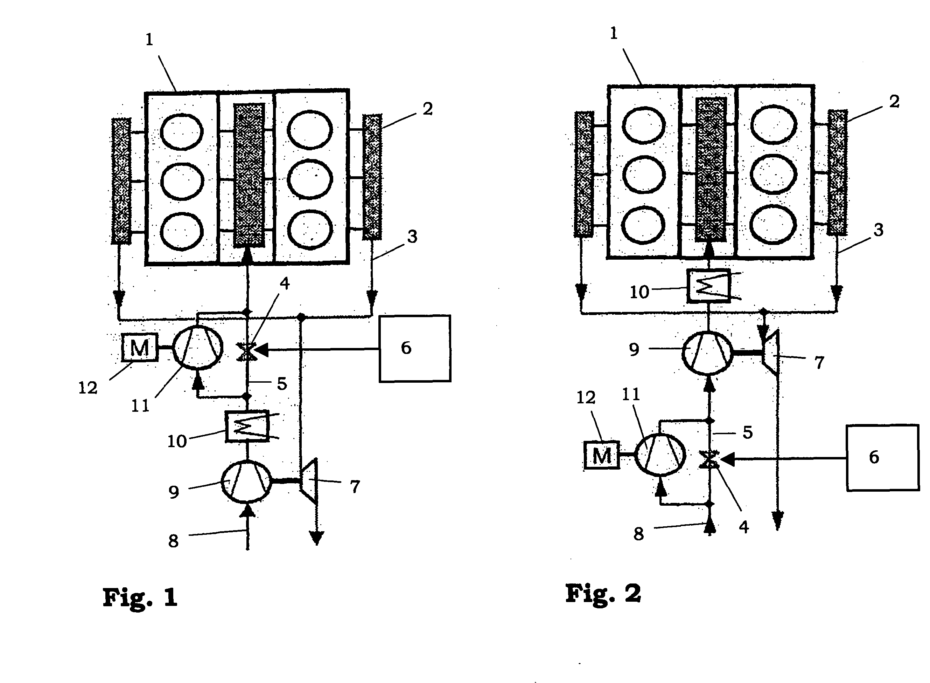

Figur 1 zeigt schematisch eine Brennkraftmaschine 1 mit sechs Zylindern, bei der es sich insbesondere um einen Dieselmotor handeln kann. Zur Erhöhung der Leistung einer solchen Brennkraftmaschine ist es bekannt, einen Abgasturbolader vorzusehen. Dabei ist im Abgasweg der Brennkraftmaschine, der durch den Abgaskrümmer 2 sowie die Abgasleitungen 3 gebildet wird, eine Turbine 7 angeordnet, welche vom Abgasstrom in Drehung versetzt wird. Diese Drehung überträgt die Turbine über eine Welle auf einen Verdichter 9, der in der Ansaugleitung 8 der Brennkraftmaschine angeordnet ist. Der Brennkraftmaschine 1 wird hierdurch verdichtete Ladeluft zugeführt, welche vor dem Eintritt in die Brennkraftmaschine über einen Zwischenkühler 10 geführt werden kann. Für eine zusätzliche Druckerhöhung ist stromabwärts des Verdichters 9 in der Ansaugleitung ein Kompressor 11 ("EDC") angeordnet, welcher von einem Elektromotor 12 angetrieben wird. Weiterhin ist eine Bypaßleitung 5 vorgesehen, die der Umgehung des Kompressors 11 dient und die durch eine Bypaßklappe 4 wahlweise geöffnet und geschlossen werden kann.

Die Bypaßklappe 4 wird von einem hiermit verbundenen Aktuator und einer Regelung 6 derart eingestellt, daß bei abgeschaltetem EDC 11 beziehungsweise Motor 12 und geringer Drehzahl der Brennkraftmaschine 1 ein Teil der Ladeluft aus der Ansaugleitung 8 über den EDC 11 geleitet wird und diesen aufgrund einer aerodynamischen Mitnahme in Drehung versetzt. Auch bei abgeschaltetem Motor 12 dreht sich der EDC daher mit einer Leerlaufdrehzahl, welche zu einer besseren transienten Antwort des EDC führt. Die Gründe hierfür liegen möglicherweise in einem bereits existierenden elektromagnetischen Feld, im Fehlen eines Losreißmomentes zum Starten des EDC sowie in einer verkürzten beziehungsweise auf Null reduzierten Zeit zum vollständigen Schließen der Bypaßklappe 4.

In Figur 2 ist ein ähnliches System mit einem elektrisch angetriebenen Kompressor 11 dargestellt, wobei im Unterschied zu Figur 1 der Kompressor 11, der Elektromotor 12 sowie die Bypaßleitung 5 mit der zugehörigen Bypaßklappe 4 stromaufwärts vor dem Verdichter 9 des Abgasturboladers angeordnet ist.

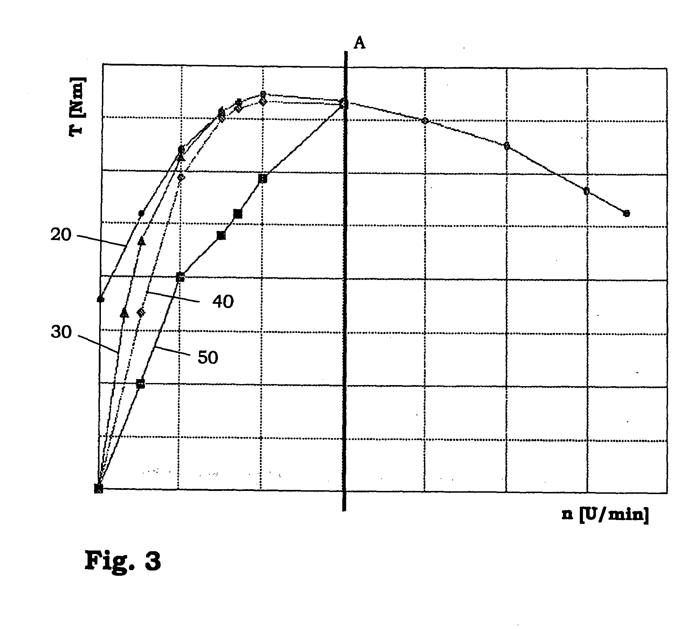

In Figur 3 ist das verbesserte Reaktionsverhalten des erfindungsgemäßen Ladesystems in einem Diagramm veranschaulicht. In dem Diagramm sind auf der vertikalen Achse das Drehmoment T und auf der horizontalen Achse die Drehzahl n der Brennkraftmaschine aufgetragen. Der elektrisch betriebene Kompressor EDC ist nur im unteren Drehzahlbereich (links der vertikalen Linie A) aktiv, da dieser oberhalb einer gewissen Drehzahl aufgrund der dann ausreichenden Leistung des Abgasturboladers nicht benötigt wird.

Die oberste Kurve 20 des Diagramms zeigt den Verlauf des Drehmomentes T im stationären Zustand. Die drei übrigen Kurven 30, 40 und 50 betreffen den vorliegend interessierenden Fall, daß die Brennkraftmaschine möglichst schnell auf hohe Drehzahl und hohes Drehmoment hochgefahren werden soll.

Die unterste Kurve 50 zeigt dabei das Hochfahren, wenn kein EDC vorhanden ist. In diesem Falle steigt der Ladedruck der Brennkraftmaschine nur sehr langsam an, da die Leistung des Abgasturboladers erst mit zunehmender Drehzahl der Brennkraftmaschine ansteigt.

Eine erhebliche Verbesserung dieses transienten Verhaltens wird gemäß Kurve 40 bei Einsatz eines EDC erreicht, welcher im Bereich geringer Drehzahlen der Brennkraftmaschine durch Einsatz elektrischer Energie eine Erhöhung des Ladedruckes und damit eine schnellere Leistungssteigerung der Brennkraftmaschine bewirkt.

Eine nochmalige und überraschend deutliche Verbesserung des transienten Verhaltens der Brennkraftmaschine zeigt die Kurve 30, welche unter Einsatz eines EDC gewonnen wird, der in erfindungsgemäßer Weise gesteuert wird. Das heißt, daß der EDC trotz Abschalten seiner Stromzufuhr über ein vollständiges oder teilweises Schließen der Bypaßklappe 4 bei geringen Drehzahlen der Brennkraftmaschine auf einer Leerlaufdrehzahl gehalten wird, von der aus dieser im Bedarfsfalle schnell eine optimale Leistung und damit eine Erhöhung des Ladedruckes erreicht.

## Patentansprüche

1. Verfahren zur Erhöhung des Ladedrucks einer Brennkraftmaschine (1) mit Hilfe eines elektrisch betriebenen Kompressors (11), wobei eine den Kompressor umgehende Bypaßleitung (5) mit einer darin angeordneten Bypaßklappe (4) vorgesehen ist,
**dadurch gekennzeichnet, daß**
die Bypaßklappe (4) bei ausgeschaltetem Kompressor (11) ganz oder teilweise geschlossen wird.

2. Verfahren nach Anspruch 1,
**dadurch gekennzeichnet, daß**
die Bypaßklappe (4) bei geringer Drehzahl und/oder bei geringer Last der Brennkraftmaschine (1) und bei ausgeschaltetem Kompressor (11) ganz oder teilweise geschlossen wird.

3. Verfahren nach Anspruch 1 oder 2,
**dadurch gekennzeichnet, daß**
das Öffnen der Bypaßklappe (4) derart geregelt wird, daß eine vorgegebene Leerlaufdrehzahl des Kompressors (11) eingehalten wird.

4. Verfahren nach mindestens einem der Ansprüche 1 bis 3,
**dadurch gekennzeichnet, daß**
das Öffnen der Bypaßklappe (4) derart geregelt wird, daß ein vorgegebener Druckabfall über den abgeschalteten Kompressor (11) eingehalten wird.

5. Ladesystem für eine Brennkraftmaschine (1), enthaltend einen elektrisch betriebenen Kompressor (11) und eine den Kompressor umgehende Bypaßleitung (5) mit einer Bypaßklappe (4), wobei die Bypaßklappe mit einem Aktuator verbunden ist, der eine aktive Verstellung der Bypaßklappe erlaubt,
**dadurch gekennzeichnet, daß**
der Aktuator mit einem Regler (6) verbunden ist, welcher zur Durchführung eines Verfahrens nach mindestens einem der Ansprüche 1 bis 4 eingerichtet ist.

6. Ladesystem nach Anspruch 5,
**dadurch gekennzeichnet, daß**
der elektrisch betriebene Kompressor (11) stromaufwärts oder stromabwärts eines Abgasturboladers (7, 9) angeordnet ist.

## Claims

1. Method for increasing the boost pressure of an internal combustion engine (1) with the aid of an electrically driven compressor (1), a bypass line (5), which bypasses the compressor and has a bypass valve (4) arranged in it, being provided, **characterized in that** the bypass valve (4) is completely or partially closed when the compressor (11) is switched off.

2. Method according to Claim 1, **characterized in that** the bypass valve (4) is completely or partially closed when the internal combustion engine (1) is at a low speed and/or under a low load and when the compressor (11) is switched off.

3. Method according to Claim 1 or 2, **characterized in that** the opening of the bypass valve (4) is controlled in such a manner that a predetermined idling speed of the compressor (11) is maintained.

4. Method according to at least one of Claims 1 to 3, **characterized in that** the opening of the bypass valve (4) is controlled in such a manner that a predetermined pressure drop across the switched-off compressor (11) is maintained.

5. Supercharging system for an internal combustion engine (1), including an electrically driven compressor (11) and a bypass valve (5), which bypasses the compressor, with a bypass valve (4), wherein the bypass valve is connected to an actuator which allows active adjustment of the bypass valve **characterized in that** the actuator is connected to a controller (6) which is designed to carry out the method according to at least one of claims 1 to 4.

6. Supercharging system according to Claim 5, **characterized in that** the electrically driven compressor (11) is arranged upstream or downstream of an exhaust-gas turbo charger (7, 9).

## Revendications

1. Procédé pour augmenter la pression de charge d'un moteur à combustion interne (1) à l'aide d'un compresseur (11) à fonctionnement électrique, une conduite de bipasse (5) contournant le compresseur et dans laquelle se trouve un clapet de bipasse (4) étant prévue, **caractérisé en ce que** le clapet de bipasse (4) est entièrement ou partiellement fermé lorsque le compresseur (11) est arrêté.

2. Procédé selon la revendication 1, **caractérisé en ce que** le clapet de bipasse (4) est entièrement ou partiellement fermé à faible régime et/ou à faible charge du moteur à combustion interne (1) et lorsque le compresseur (11) est arrêté.

3. Procédé selon la revendication 1 ou 2,
**caractérisé en ce que** l'ouverture du clapet de bipasse (4) est régulée de manière à maintenir une vitesse de rotation à vide prédéfinie du compresseur (11).

4. Procédé selon au moins l'une des revendications 1 à 3, **caractérisé en ce que** l'ouverture du clapet de bipasse (4) est régulée de manière à maintenir une chute de pression prédéfinie de part et d'autre compresseur (11) arrêté.

5. Système de charge pour un moteur à combustion interne (1), comprenant un compresseur (11) à fonctionnement électrique et une conduite de bipasse (5) munie d'un clapet de bipasse (4) et contournant le compresseur, le clapet de bipasse étant relié à un actionneur qui permet un positionnement actif du clapet de bipasse, **caractérisé en ce que** l'actionneur est relié à un régulateur (6) qui est conçu pour mettre en oeuvre un procédé selon au moins l'une des revendications 1 à 4.

6. Système de charge selon la revendication 5, **caractérisé en ce que** le compresseur (11) à fonctionnement électrique est disposé en amont ou en aval du turbocompresseur de gaz d'échappement (7, 9).
